# EUROPEAN PATENT APPLICATION

(11) **EP 1 701 477 A1**
(43) Date of publication of application: **13.09.2006**
(21) Application number: 06110547.4
(22) Date of filing: 01.03.2006
(51) Int. Cl.: H04L 12/28

(54) **Detection of supported network frequency to enable successful connection to wireless networks**

(30) Priority: 07.03.2005 US 74487
(71) Applicant: Microsoft Corporation, Redmond WA 98052 (US)
(72) Inventor: Abhishek, Abhishek, c/o Microsoft Corporation, Redmond, WA 98052 (US); Krantz, Anton W., c/o Microsoft Corporation, Redmond, WA 98052 (US)
(74) Representative: Grünecker, Kinkeldey, Stockmair & Schwanhäusser Anwaltssozietät

(57) **Abstract**

An evaluation of supported rates of available wireless networks is performed and these supported rates are matched against supported rates of wireless connection hardware (e.g., a wireless network interface card) of a computer trying to connect to one of the wireless networks. If the wireless connection hardware of the computer supports the rates supported by a desired wireless network, the computer is able to connect to the wireless network. If the supported rates for the wireless network and the wireless network hardware of the computer do not match, the computer is not able to connect to the wireless network and the situation is handled accordingly, such as by presenting the computer an appropriate message or not permitting the computer to connect to the wireless network.

## Description

### FIELD OF THE INVENTION

This invention pertains generally to computer systems and, more particularly, to establishing communication with a wireless network.

### BACKGROUND OF THE INVENTION

Today, people use digital networks to communicate in many different ways. Speech, text, World Wide Web pages, and streaming live video are just a few examples of items that may be exchanged through a digital network.

The ability to connect to a digital network at a fixed physical location is typically done via a wired connection, such as through cable. Connecting to a digital network in this manner requires an initial registration, after which the computer typically does not require additional registration for subsequent connections.

The ability to connect to a digital network while remaining mobile is more complex. Upon trying to connect, computer users are often provided a choice of multiple wireless networks. In contemporary computer systems, prior to making a decision about a wireless network to which to connect, a computer is provided information from each of the available wireless networks. The information includes, inter *alia,* a service set identifier (SSID). The SSID is a 32 character unique identifier attached to a header of packets sent over a wireless local-area network (WLAN) that is essentially a network name used to identify the wireless network.

The SSID of the network is then provided on a user interface on the computer that is trying to connect to a wireless network. With this limited information, the user is expected to choose between multiple available networks, often without knowing the wireless networks with which the user's computer will work.

Often, the wireless connection hardware on the computer will not be compatible with the data rates on a wireless network. As an example, in the IEEE 802.11X universe, just a few short years ago, most wireless local area networks (LAN) in deployment were IEEE 802.11b networks. More recently, IEEE 802.11g and IEEE 802.11a networks, using much faster data rates, have been implemented and are becoming more prevalent. However, many of the IEEE 802.11b networks and wireless network cards are still in use. This environment can lead to a situation where a wireless client is not compatible with a network that it can see during the registration process.

By default, most IEEE 802.11g networks are backwardly compatible to IEEE 802.11b data rates. However, some networks are designated as not being backwardly compatible, for example, an "IEEE 802.11g only" network. The reason for not being backwardly compatible is that the addition of slower clients, such as the computer 202, to a wireless network causes the whole system to run at the lower data rate. These networks that are not backwardly compatible provide a problem for a user having older wireless connection hardware, in this example, a user having an IEEE 802.11b network access card. In contemporary computer systems, the user would see an IEEE 802.11g only network, but upon selecting that network, the connection would fail. However, nothing provided to the user prior to attempting to connect would have indicated that the network was not compatible.

### BRIEF SUMMARY OF THE INVENTION

This section presents a simplified summary of some embodiments of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

In accordance with an embodiment, an evaluation of supported rates of available wireless networks is performed and these supported rates are matched against supported rates of wireless connection hardware (e.g., a wireless network interface card) of a computer trying to connect to one of the wireless networks. As an example, the supported rates of the wireless networks may be matched against supported rates of a wireless network interface card for a computer. If the wireless connection hardware for the computer supports the rates supported by a desired wireless network, the computer is able to connect to the wireless network. If the supported rates for the wireless network and the wireless connection hardware for the computer do not match, the computer is not able to connect to the wireless network and the situation is handled accordingly, such as presenting the computer an appropriate message or not permitting the user to attempt to connect to the network.

In an embodiment, evaluation of compatible rates involves a comparison of basic rates advertised by the wireless access point or peer and the wireless connection hardware on the computer. Other available rates may also be taken into account.

### BRIEF DESCRIPTION OF THE DRAWINGS

While the appended claims set forth the features of the invention with particularity, the invention and its advantages are best understood from the following detailed description taken in conjunction with the accompanying drawings, of which:

Figure 1 illustrates an example of a suitable computing system environment on which the invention may be implemented;

FIG. 2 shows an access point to which a computer is attempting to connect in accordance with an embodiment of the invention;

FIG. 3 shows an architecture of a computer that may be implemented with an embodiment of the present invention;

FIG. 4 shows steps for initiating a connection with a wireless network in accordance with an embodiment; and

FIG. 5 shows a display of a user interface that may be utilized to select a wireless network in accordance with an embodiment of the invention.

### DETAILED DESCRIPTION OF THE INVENTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described.

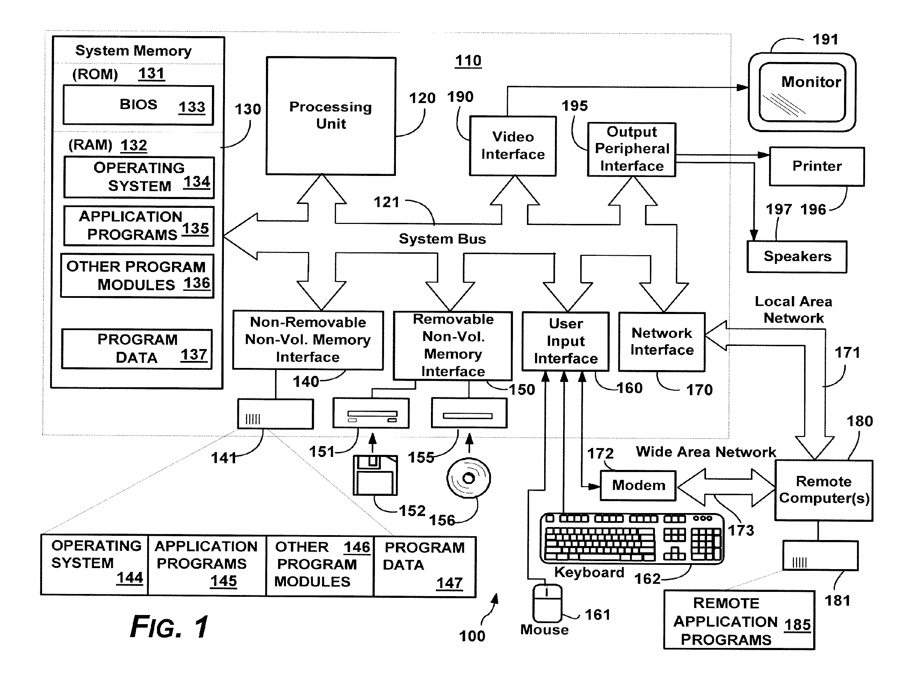

Referring now to the drawings, in which like reference numerals represent like parts throughout the several views, FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media.
Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like.
The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules, and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball, or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. In a wireless environment, the network interface is often a wireless network interface card (NIC), although other wireless connection hardware may be used. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

In general, the present invention provides a method and system for aiding a wireless device to connect to a wireless network, in one embodiment a wireless LAN network. As is known, wireless networks typically include one or more access points (APs) to which a wireless device, such as a wireless enabled computer, may connect. In general, an access point is a structure or node through which a wireless device may access a wireless network. One example is an antenna. In addition, an access node may be a wireless device participating in an ad hoc network. As is known, an ad hoc network is a transitory association of mobile nodes which do not depend upon any fixed support infrastructure. Connection and disconnection is controlled by the distance among nodes and by willingness to collaborate in the formation of a cohesive, albeit transitory, community. Each willing participant in the ad hoc network is potentially an access node which coordinates the ad hoc network.

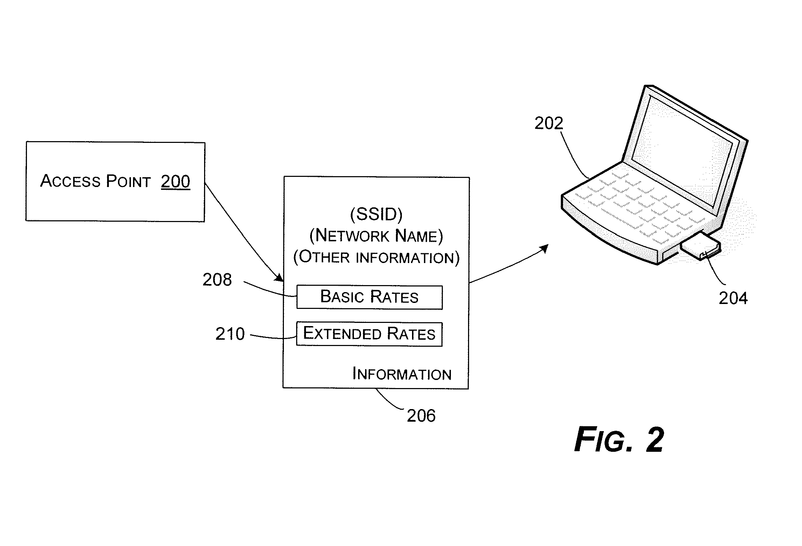

FIG. 2 shows an access point 200 to which a wireless device, in the embodiment shown, a computer 202 (e.g., the computer 110) is attempting to connect. Although the embodiment shown discloses a laptop computer as the computer 202, the wireless device attempting to connect to a wireless network may be any wireless enabled device, including but not limited to PDAs, hand-held computers, internet enabled phones, personal computers, programmable consumer electronics, minicomputers, and other wireless enabled devices.

As is known, conventional wireless services detect wireless networks in range based upon the access points detected by the wireless connection hardware on the computer 202, such as a wireless network interface card (NIC) 204 (e.g., the network interface or adapter 170). Access points, such as the access point 200, beacon out information 206 regarding the wireless network. As an example, the access points 200 may beacon out SSID (network name) and other information, such as whether privacy is enabled or not. In addition, conventional access points beacon out basic data rates 208 that the access point 200 supports. These basic data rates 208 typically include a set of data rates, which might, for example, correspond to one or more of the IEEE 802.11X data rate sets. As an example, if a wireless network supports only IEEE 802.11g data rates, then the basic data rates may be 6, 12 Megabits per second (Mbps) and one or more of 18, 22, 24, 33, 36, 48 and 54 Mbps. Typical basic data rates for IEEE 802.11b are 1, 2, 5.5, and 11 Mbps. One or both of these sets may be included in the basic data rates 208 for an access point, such as the access point 200. As an example, an IEEE 802.11g access point that is backwardly compatible to IEEE 802.11b may include both of these sets in the base date rates 208.

The information 206 beaconed by the access point 200 also may include extended data rates 210. Extended data rates 210 are typically included as an information set and represent data rates that are supported by the access point but are not mandatory for the client to support when establishing a connection to the access point 200.

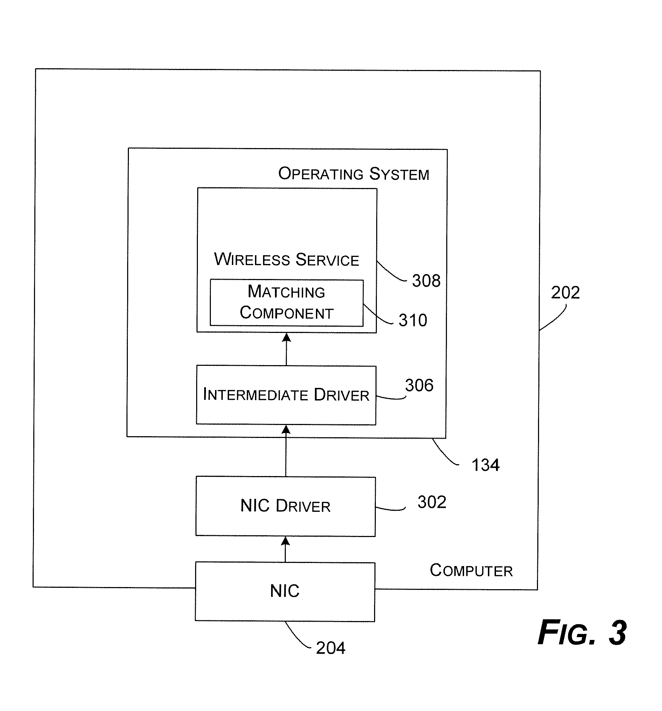

FIG. 3 shows an architecture of a computer, such as the computer 202, that may be implemented in accordance with an embodiment of the present invention. As discussed above, the computer 202 includes a NIC 204. The NIC 204 includes a driver 302 that communicates with the operating system 134 for the computer 202. A wireless service 304 is a component of or is otherwise associated with the operating system 134. An intermediate driver 306 is positioned to receive communications from the driver 302 and forward them to the wireless service 304. The intermediate driver 306 translates communications from the driver 302 for the NIC 204 into information that may be utilized by the wireless service 304.

The wireless service 304 includes a matching component 310. The function of the matching component 310 is described below.

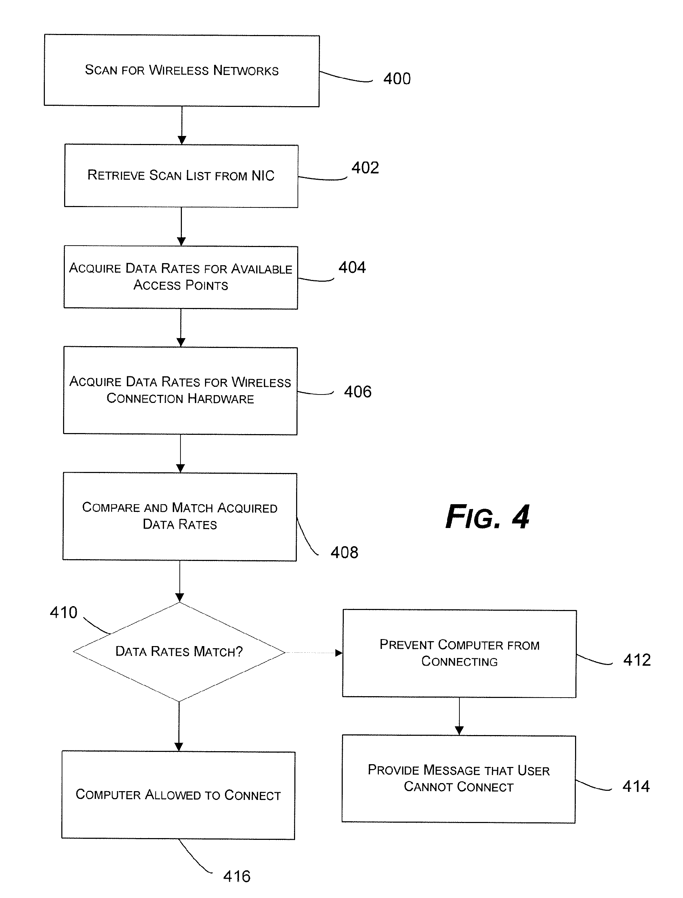

FIG. 4 shows steps for initiating connection with a wireless network in accordance with an embodiment. Beginning at step 400, a device wishing to connect to a wireless network, such as the computer 202, scans for wireless networks in the vicinity. This may be done, for example, by sending a request, in one example, the request OID_801_11_BSSID_LIST_SCAN. The NIC 204 sends the request and in return receives information packets, such as the information 206 shown as being beaconed in FIG. 2, from available access points, such as the access point 200.

The combined returned information 206 from each of the access points within range of the computer 202 constitutes a scan list. The scan list is retrieved in step 402 from the NIC 204. Retrieving the scan list may be done, for example, by calling a particular method in the driver 302 for the NIC 204, such as OID_802_11_BSSID_LIST. The returned scan list (e.g., BSSID_LIST) contains information 206 from each access point 200 detected in the scan. Included in the information is the set of basis rates 208 that the access point 200 supports, and the set of extended rates 210 that the access point supports. This information is extracted from the scan list in step 404, for example by the matching component 310 of the wireless service 308.

At step 406, the basic rates supported by the wireless connection hardware, such as the NIC 204, for the computer 202, are obtained. This may be done, for example, by the matching component 310 querying the NIC 204 via a known call method. As alternatives, the information may have previously been available to the wireless service 304 (e.g., as a list or other data provided upon installation of the wireless service or the NIC 204) or may be maintained in and accessed from a database that is accessible by the wireless service 304. In any event, the rates supported by the NIC 204 are obtained at step 406.

At step 408, the acquired data rates for the access points are compared to the acquired data rates for the wireless connection hardware, for example by the matching component. At step 410, a determination is made for each wireless network whether the wireless connection hardware for the device, e.g., the NIC 204 for the computer 202, supports the network access point data rates (i.e., the data rates for the wireless connection hardware matches data rates for the access point). In an embodiment, the determination involves whether all network access point basic data rates are supported, although other rates, such as extended rates, may be considered. In an embodiment, the entire set of basic data rates for the access point is matched with available hardware rates for the wireless connection hardware and, if available in the hardware rates, the connection is deemed compatible. By matching each of the data rates in the set, the network can change between the data rates within the set and is ensured that the hardware can be responsive to the changes by operating at a new rate within the set.

If the data rates available for the wireless connection hardware do not match the basic data rates for the access point, then step 410 branches to step 412, where the client is prevented from attempting to connect to the wireless network. At step 414, the client is provided a message or is otherwise told that access to the particular wireless network is not available. If all network access point basic rates are supported by the NIC 204, then step 410 branches to step 416, where the computer 202 is allowed to connect to the wireless network. Alternatively, an indication that the wireless network is available for connection may first be provided, and then the user may connect.

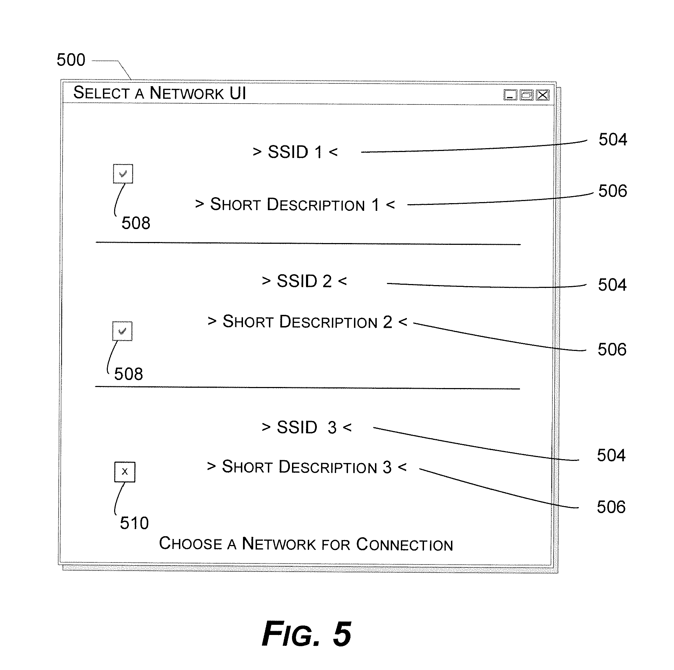

FIG. 5 shows a display of a user interface that may be provided, for example, by the computer 202. The user interface 500 is the user interface provided by the computer 202 for indicating available wireless networks. In the example shown, three different wireless networks are within range of the NIC 204 and are displayed, and the SSID 504 and a short description 506 are shown for each. The first two have data rates that are compatible with the available data rates of the NIC 204. The laptop computer, via instructions in the wireless service 304, displays an icon 508 for each of these two indicating that the two are available for connection. A different icon 510 is displayed by the computer 202 for the third wireless network, which does not have compatible data rates. Other visual displays may be used, included highlighting a compatible network, circling the network, or otherwise indicating a difference with a non-compatible network.

The user interface 500 is one example of information that may be provided to a user upon determining that particular access points 200 are compatible with the user's hardware. For example, the user's computer may be configured to automatically connect to particular access points if a positive determination is made regarding compatibility. As another example, only compatible wireless networks may be displayed (i.e., in the user interface 500 shown in FIG. 5, the third network would not be visible).

In accordance with an alternate embodiment, some matching may occur at the NIC driver 302 and/or filtering of some of the information from the access point 200 may occur at the NIC driver. However, preferably, all information regarding data rates is forwarded to the wireless services 304 so that the wireless service is in possession of the information and may use the information accordingly.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A computer-readable medium having thereon computer-executable instructions for performing a method comprising:
obtaining a set of available access data rates from an access point of a wireless network or a wireless peer in the wireless network;
comparing the set to hardware data rates available to wireless connection hardware on a wireless device; and
if the set is included in the hardware data rates, generating a first signal indicative that the wireless device is capable of connection with the wireless network.

2. The computer-readable medium of claim 1, further comprising, if the set is not included in the hardware data rates, generating a second signal indicative that the wireless device is not capable of connection with the wireless network.

3. The computer-readable medium of claim 2, wherein the set comprises basic data rates for the wireless network.

4. The computer-readable medium of claim 2, further comprising:
responsive to the first signal, providing a first indication on a user interface, the indication shown in connection with information about the wireless network; and
responsive to the second signal, providing a second indication on the user interface, the indication shown in connection with information about the wireless network.

5. The computer-readable medium of claim 2, further comprising, responsive to the first signal, displaying information about the wireless network on a user interface, and responsive to the second signal, not displaying information about the wireless network on the user interface.

6. The computer-readable medium of claim 2, further comprising, responsive to the second signal, preventing the wireless device to attempt connection to the wireless network.

7. The computer-readable medium of claim 6, further comprising, responsive to the first signal, permitting the wireless device to attempt connection to the wireless network.

8. The computer-readable medium of claim 1, wherein the set comprises basic data rates for the wireless network.

9. The computer-readable medium of claim 1, further comprising, responsive to the first signal, permitting the wireless device to attempt connection to the wireless network.

10. A computer-implemented method comprising:
obtaining a set of available access data rates from an access point of a wireless network or a wireless peer in the wireless network;
comparing the set to hardware data rates available to wireless connection hardware on a wireless device; and
if the set is included in the hardware data rates, permitting the wireless device to attempt to connect to the wireless network.

11. The method of claim 10, further comprising, if the set is not included in the hardware data rates, preventing the wireless device from attempting to connect to the wireless network.

12. The method of claim 11, wherein the set comprises basic data rates for the wireless network.

13. The method of claim 11, further comprising:
if the set is included in the hardware data rates, providing a first indication on a user interface, the first indication shown in connection with information about the wireless network; and
if the set is not included in the hardware data rates, providing a second indication on the user interface, the second indication shown in connection with information about the wireless network.

14. The method of claim 11, further comprising, if the set is included in the hardware data rates, displaying information about the wireless network on a user interface, and if the set is not included in the hardware data rates, not displaying information about whether the wireless device is able to connect to the wireless network on the user interface.

15. The method of claim 10, wherein the set comprises basic data rates for the wireless network.

16. A computer-readable medium having thereon computer-executable instructions for performing the method of claim 10.

17. A computer-implemented method comprising:
obtaining a set of available access data rates from an access point of a wireless network or a wireless peer in the wireless network;
comparing the set to hardware data rates available to wireless connection hardware on a wireless device; and
if the set is not included in the hardware data rates, preventing the wireless device from attempting to connect to the wireless network.

18. The method of claim 17, wherein the set comprises basic data rates for the wireless network.

19. The method of claim 17, further comprising, responsive to the set not being included in the hardware data rates, providing an indication on a user interface that connection to the wireless network is not possible.

20. A computer-readable medium having thereon computer-executable instructions for performing the method of claim 17.
